# EUROPÄISCHE PATENTSCHRIFT

(11) **EP 3 009 276 B1**
(45) Veröffentlichungstag und Bekanntmachung des Hinweises auf die Patenterteilung: **13.09.2017**
(21) Anmeldenummer: 15178747.0
(22) Anmeldetag: 29.07.2015
(51) Int. Cl.: B60C 11/03, B60C 11/13

(54) **FAHRZEUGLUFTREIFEN**
PNEUMATIC TYRE FOR A VEHICLE
PNEUMATIQUE DE VEHICULE

(30) Priorität: 16.10.2014 DE 102014220981
(43) Veröffentlichungstag der Anmeldung: 20.04.2016
(73) Patentinhaber: Continental Reifen Deutschland GmbH, 30165 Hannover (DE)
(72) Erfinder: Rittweger, Stefan, 30163 Hannover (DE)
(74) Vertreter: Finger, Karsten

(56) Entgegenhaltungen:
- EP-A1- 1 580 035
- EP-A1- 2 636 544
- EP-A2- 2 404 768

## Beschreibung

Die Erfindung betrifft einen Fahrzeugluftreifen mit einem Laufstreifenprofil mit zumindest einer Umfangsrille und mindestens einer zumindest an der einen Seite von einer Umfangsrille begrenzten Blockreihe, deren Blöcke durch Querrillen voneinander getrennt sind, welche an den Blockoberflächen von Blockkanten begrenzt sind, einer beim Abrollen des Reifens (bei Vorwärtsfahrt) zuerst in den Untergrund eintretenden einlaufenden Blockkante und der am benachbarten Block vorgesehenen auslaufenden Blockkante, wobei sich die einlaufende Blockkante aus zwei Abschnitten zusammensetzt, von welchen der an die Umfangsrille anschließende Abschnitt der kürzere ist und welche zueinander unter einem stumpfen Winkel verlaufen, sodass jeder Block zwischen dem einen Abschnitt und der den Block bei der Umfangsrille in Umfangsrichtung begrenzenden Blockkante einen keilartigen bzw. dreieckigen Ansatz aufweist, wobei der längere Abschnitt der einlaufenden Blockkante über seine Länge mit einer eine Schrägfläche bildenden Fase versehen ist, wobei die auslaufende Blockkante über ihre gesamte Erstreckung einen insgesamt im Wesentlichen geraden oder leicht bogenförmigen Verlauf aufweist, wobei der gegenseitige Abstand zwischen der einlaufenden Blockkante und der auslaufenden Blockkante an der Knickstelle zwischen den beiden Abschnitten der einlaufenden Blockkante am größten ist und ausgehend von der Knickstelle in beide Richtungen abnimmt.

Ein derartiger Fahrzeugluftreifen ist beispielsweise aus der EP 1 580 035 A1 bekannt.

Aus der DE 10 2010 017 743 A1 ist ein Fahrzeugluftreifen mit einem Laufstreifen mit zumindest eine Schulterblockreihe, welche durch Querrillen in Blöcke gegliedert ist, bekannt, wobei sich die Querrillen ausgehend von der die Schulterblockreihe begrenzenden Umfangsrille aus zwei Abschnitten zusammensetzen, die miteinander einen stumpfen Winkel einschließen. Die Blockkanten, welche jeweils eine Querrille begrenzen, verlaufen zueinander parallel. Der an die Umfangsrille anschließende Abschnitt ist kürzer als der zweite Abschnitt und verläuft unter einem Winkel zur Querrichtung, derart, dass am Profilblock ein etwa dreieckiger Ansatz gebildet ist.

Es ist üblich, in Laufstreifenprofilen Querrillen auszubilden, insbesondere in schulterseitig verlaufenden Blockreihen. Diese Querrillen haben unter anderem die Aufgabe, Wasser aus der Bodenaufstandsfläche zur Seite hinaus zu befördern. Querrillen sind jedoch meist mit dem Nachteil behaftet, bestimmte Eigenschaften des Laufstreifens, insbesondere die Bremseigenschaften des Reifens auf trockenen Fahrbahnen und das Abrollgeräusch, zu beeinträchtigen.

Der Erfindung liegt die Aufgabe zugrunde, einen Reifen mit einem Laufstreifen der eingangs genannten Art derart zu verbessern, dass eine gute Querentwässerung nach wie vor gewährleistet ist, aber die Eigenschaften des Reifens auf trockener Fahrbahn, insbesondere die Bremseigenschaften und das Abrollgeräusch, verbessert sind.

Gelöst wird die gestellte Aufgabe erfindungsgemäß dadurch, dass die an der einlaufenden Blockkante ausgebildete Fase ihre größte Flächenbreite an der Knickstelle zwischen den Abschnitten dieser Blockkante aufweist und entlang des kürzeren Abschnittes ausläuft.

Die an der einlaufenden Blockkante ausgebildete Fase versteift den Block, wodurch sich die Bremseigenschaften des Laufstreifens auf trockener Fahrbahn verbessern. Der grundsätzlich nachteilige Einfluss dieser Versteifung auf das Abrollgeräusch wird dadurch ausgeglichen, dass der Block einen keilartigen bzw. dreieckigen Ansatz aufweist und dass die Blockkanten den erwähnten speziellen Verlauf aufweisen. Der keilförmige Ansatz hat ein sanfteres Einlaufen des Blockes in die Bodenaufstandsfläche zur Folge, was ebenso wie die sich verengenden Abschnitte der Querrille für das Abrollgeräusch von Vorteil ist. Die spezielle Auslegung der Fase ist für die Stabilisierung der Steifigkeit des von dieser Blockkante begrenzten Profilblockes vorteilhaft.

Eine weitere, diesbezüglich günstige Maßnahme besteht darin, dass der Winkel, den die Abschnitte der einlaufenden Blockkante miteinander einschließen, 140° bis 170° beträgt.

Eine weitere für die Blockstabilisierung und damit die Bremseigenschaften auf trockener Fahrbahn günstige Maßnahme besteht darin, dass an der auslaufenden Blockkante über ihre gesamte Erstreckung ebenfalls eine Fase ausgebildet ist.

Je nach Blockumfangslänge und Reifengröße beträgt dabei der größte Abstand zwischen den Blockkanten 3 mm bis 8 mm.

Für eine gute Querentwässerung durch die Querrillen ist es ferner von Vorteil, wenn der längere Abschnitt der einlaufenden Blockkante mit der auslaufenden Blockkante einen spitzen Winkel in der Größenordnung von 5° bis 15° einschließt.

Für das Abrollgeräusch ist eine weitere Maßnahme günstig, nämlich, dass im Bereich des keilartigen Ansatzes jeder Block mit dem benachbarten Block über eine die Querrille überbrückende Grundanhebung verbunden ist.

Für das Entwässerungsvermögen in den Querrillen ist es günstig, wenn die Grundanhebung die Tiefe dieser Querrille an dieser Stelle lediglich um 40 % bis 60 % verringert und wenn die Grundanhebung beidseitig geneigte, Richtung Rillengrund abfallende Flankenflächen aufweist.

Die erfindungsgemäße Ausgestaltung der Querrillen bzw. der an diese angrenzenden Blöcke ist besonders in Blöcken von schulterseitig verlaufenden Blockreihen vorteilhaft.

Infolge der erfindungsgemäßen Ausgestaltung von ein- und auslaufenden Blockkanten sind ferner erfindungsgemäß gestaltete Laufstreifen vorzugsweise laufrichtungsgebunden ausgeführte Laufstreifen, insbesondere solche, die ein insgesamt gepfeilt ausgeführtes Laufstreifenprofil aufweisen.

Weitere Merkmale, Vorteile und Einzelheiten der Erfindung werden nun anhand der Zeichnung, die ein Ausführungsbeispiel darstellt, näher beschrieben. Dabei zeigen
Fig. 1 eine Draufsicht auf eine Teilabwicklung eines Laufstreifens eines Fahrzeugluftreifens,
Fig. 2 eine vergrößerte Darstellung (Draufsicht) einer Querrille im Detail,
Fig. 3 eine Schnittdarstellung entlang der Linie III-III der Fig. 2 und
Fig. 4 eine Schnittdarstellung entlang der Linie IV-IV der Fig. 2.

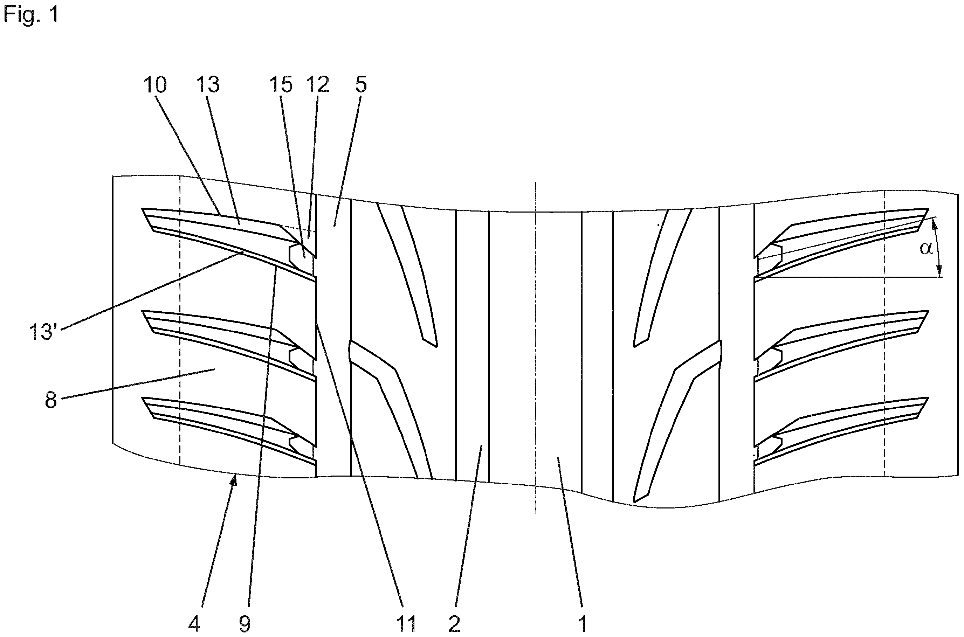

Fig. 1 zeigt beispielhaft einen Ausschnitt eines Laufstreifens eines Fahrzeugluftreifens, insbesondere für Personenkraftwagen oder Vans, mit einem im zentralen Bereich umlaufenden Profilband 1, beidseitig des Profilbandes 1 verlaufenden, vom zentralen Profilband 1 durch Umfangsrillen 2 getrennten mittleren Profilbändern 3 und schulterseitigen Blockreihen 4, die durch weitere Umfangsrillen 5 von den Profilbändern 3 getrennt sind. In den mittleren Profilbändern 3 sind Schrägrillen 6 angeordnet, die gegenüber der Umfangsrichtung unter einem spitzen Winkel geneigt verlaufen, wobei die Schrägrillen 6 im Profilband 3 in der einen Laufstreifenhälfte gegenüber den Schrägrillen 6 im Profilband 3 in der anderen Laufstreifenhälfte gegensinnig geneigt sind, sodass ein gepfeilt ausgeführtes, laufrichtungsgebundenes Laufstreifenprofil vorliegt. In den schulterseitigen Blockreihen 4 erfolgt durch eine Vielzahl von Querrillen 7 eine Gliederung in Blöcke 8. Die Querrillen 7 erstrecken sich bei der gezeigten Ausführungsform im Wesentlichen in Querrichtung bzw. unter einem spitzen Winkel α von etwa 5° bis 20° zur Querrichtung, ihre Neigung stimmt in jeder Laufstreifenhälfte mit jener der Schrägrillen 6 überein. Reifen mit einem solchen Laufstreifenprofil werden derart am Fahrzeug montieren, dass die laufstreifeninnenseitigen Enden der Schrägrillen 6 beim Abrollen (Vorwärtsfahrt) zuerst in den Untergrund eintreten. Im Rahmen der Erfindung werden unter "Querrillen" grundsätzlich solche Rillen verstanden, deren Erstreckungsrichtung um höchstens 45° von der Querrichtung abweicht.

Die Erfindung befasst sich mit einer besonderen Ausgestaltung von durch Querrillen voneinander getrennten Blöcken, bei der gezeigten Ausführungsform der schulterseitigen Blöcke 8, die durch die Querrillen 7 voneinander getrennt sind.

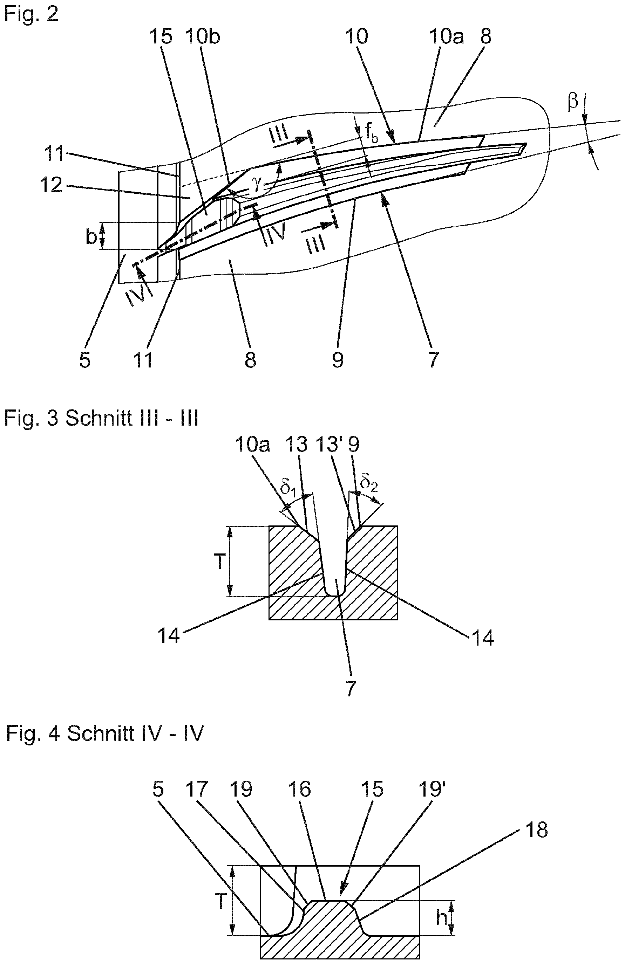

Wie insbesondere Fig. 2 zeigt, sind die Querrillen 7 an den Blockoberflächen von Blockkanten 9, 10 begrenzt, welche an einander benachbarten Blöcken 8 ausgebildet sind. Die beim Abrollen des am Fahrzeug montierten Reifens zuerst in den Untergrund eintretenden Blockkanten sind die Blockkanten 10. Diese Blockkanten werden daher als "einlaufende" Blockkanten, die anderen als "auslaufende" Blockkanten bezeichnet. Die auslaufenden Blockkanten 9 verlaufen von der Umfangsrille 5 bis zum Ende der Querrillen 7 durchgehend gerade bzw. leicht bogenförmig gekrümmt. Die Blockkanten 10 setzen sich aus zwei Abschnitten 10a und 10b zusammen, wobei der Abschnitt 10b an die Umfangsrille 5 anschließt und maximal ein Drittel der Länge des Abschnittes 10 (im bodenberührenden Bereich des Laufstreifens betrachtet) aufweist. Entlang der Umfangsrille 5 ist jeder Block 8 durch eine in Umfangsrichtung gerade verlaufende Blockkante 11 begrenzt. Die Blockkante 9 erstreckt sich bei der gezeigten Ausführungsform unter einem Winkel zur Querrichtung, welcher in der Größenordnung von 7° bis 15° beträgt. Der Abschnitt 10a der Blockkante 10 schließt mit der am benachbarten Block 8 vorgesehenen Blockkante 9 einen spitzen Winkel β von 5° bis 15° ein, derart, dass der gegenseitige Abstand der Blockanten 10a und 9 Richtung Umfangsrille 5 größer wird. Der Abschnitt 10b, welcher unmittelbar an die Blockkante 11 anschließt, verläuft zum Abschnitt 10a unter einem stumpfen Winkel γ von 140° bis 170°. Zwischen der Blockkante 11 und dem Abschnitt 10a wird daher im Block 8 bei der Umfangsrille 5 ein keilartiger bzw. etwa dreieckiger Ansatz 12 gebildet. Der Abstand der Blockkante 9 zum Abschnitt 10b wird zwischen der Knickstelle und der Umfangsrille 5 kontinuierlich geringer, wobei die Breite b der Querrille 7 an ihrer Mündungsstelle in die Umfangsrille 5 2 mm bis 3 mm beträgt. Der gegenseitige Abstand zwischen der einlaufenden Blockkante 10 und der auslaufenden Blockkante 9 ist somit an der Knickstelle zwischen den beiden Abschnitten 10a, 10b der einlaufenden Blockkante 10 am größten und beträgt je nach Blockumfangslänge und Reifengröße 5 mm bis 8 mm.

Wie insbesondere die Schnittdarstellung in Fig. 3 zeigt, schließt an die Blockkante 10 im Abschnitt 10a eine Fase 13 an, dies ist eine Schrägfläche, die zwischen der Blockoberfläche und der einen Rillenflanke 14 der Querrille 7 ausgebildet ist. Die Fase 13 läuft entlang des Abschnittes 10b aus. Der Winkel δ₁ den die Fase 13 mit der radialen Richtung einschließt, beträgt 35° bis 65°. Auch die auslaufende Blockkante 9 ist angefast, die an dieser Blockkante 9 ausgebildete Fase 13' verläuft über die gesamte Erstreckung der Blockkante 9 und unter einem Winkel δ₂ der ebenfalls 35° bis 65° gewählt wird. Die Fase 13 weist an der Knickstelle zwischen den Abschnitten 10a und 10b ihre größte Flächenbreite f_{b} in der Größenordnung von 1,5 mm bis 3 mm auf. Die Flächenbreite f_{b} wird sowohl Richtung Umfangsrille 5 als auch Richtung Laufstreifenrand kontinuierlich geringer. Wie ferner der Querschnitt durch die Querrille 7 in Fig. 3 zeigt, verlaufen die jeweils an die Fasen 13, 13' anschließend Rillenflanken 14 im Wesentlichen in radialer Richtung. Eine etwaige geringe Neigung der Rillenflanken 14 zur radialen Richtung kann gleich groß oder unterschiedlich groß sein. Die Tiefe der T Querrillen 7 kann bei der Umfangsrille 5 der Tiefe der Umfangsrille 5, die in der Größenordnung von 7 mm bis 9 mm bei PKW-Reifen beträgt, entsprechen, wobei die Tiefe der Querrillen 7 in Richtung Laufstreifenrand, wie an sich bekannt, abnehmen kann.

Im Bereich des keilartigen Ansatzes 12 ist jeder Block 8 mit seinem benachbarten Block 8 über eine Grundanhebung 15 verbunden. Durch die Grundanhebung 15 ist die Tiefe der Querrillen 7 lokal verringert, insbesondere auf 40 % bis 60 % der Tiefe T an der Mündungsstelle der Querrille 7 in die Umfangsrille 5. Dementsprechend beträgt die Höhe h der Grundanhebung 15 zwischen 40 % und 60 % der erwähnten Querrillentiefe T. Wie insbesondere die Schnittdarstellung in Fig. 4 zeigt, weist die Grundanhebung 15 eine im Wesentlichen parallel zu den Blockoberflächen verlaufende Oberfläche 16 und zwei Flankenflächen 17, 18 auf, wobei die Übergänge zwischen der Oberfläche 16 und den Flankenflächen 17, 18 angefast sind, hier sind Fasen 19, 19' ausgebildet. Die Flankenflächen 17 und 18 sind geneigte, zur Oberfläche 16 ansteigende Flächen. Es ist daher die Erstreckung der Grundanhebung 15 entlang der Querrille 7 an der Basis der Grundanhebung 15am Rillengrund größer als an ihrer Oberfläche 16. Bei der gezeigten Ausführungsform ist die die Grundanhebung 15 laufstreifenaußenseitig begrenzende Flankenfläche 18 als Schrägfläche ausgebildet, die unter einem Winkel von 15° bis 25° zur radialen Richtung verläuft, die zweite Flankenfläche 17 verläuft im Wesentlichen leicht bogenförmig gekrümmt und läuft am Rillengrund der Umfangsrille 5 aus.

Die an den einlaufenden Blockkanten 10 ausgebildeten Fasen 13 sorgen für eine Versteifung und Stabilisierung der Blöcke 8 und Verhindern ein "Einrollen" dieser Blockkanten 10 beim Bremsen, insbesondere auf trockener Fahrbahn. Die keilartigen bzw. dreieckigen Ansätze 12 der Blöcke 8 sorgen beim Einlaufen der Blockkanten 10 in den Untergrund für ein "weiches" bzw. sanftes Einlaufen und sind gemeinsam mit der Verengung der Querrillen 7 bei den Ansätzen 12 für das Abrollgeräusch vorteilhaft.

### Bezugsziffernliste

- 1: Profilband
- 2: Umfangsrille
- 3: Profilband
- 4: Blockreihe
- 5: Umfangsrille
- 6: Schrägrille
- 7: Querrille
- 8: Block
- 9: Blockkante
- 10: Blockkante
- 10a, 10b: Abschnitt
- 11: Blockkante
- 12: Ansatz
- 13, 13': Fase
- 14: Rillenflanke
- 15: Grundanhebung
- 16: Oberfläche
- 17: Flankenfläche
- 18: Flankenfläche
- 19, 19': Fase
- f_{b}: Flächenbreite
- h: Höhe
- T: Tiefe
- α: Winkel
- β: Winkel
- γ: Winkel
- δ₁, δ₂: Winkel

## Patentansprüche

1. Fahrzeugluftreifen mit einem Laufstreifenprofil mit zumindest einer Umfangsrille (2, 5) und mindestens einer zumindest an der einen Seite von einer Umfangsrille (5) begrenzten Blockreihe (4), deren Blöcke (8) durch Querrillen (7) voneinander getrennt sind, welche an den Blockoberflächen von Blockkanten (9, 10) begrenzt sind, einer beim Abrollen des Reifens (bei Vorwärtsfahrt) zuerst in den Untergrund eintretenden einlaufenden Blockkante (10) und der am benachbarten Block (8) vorgesehenen auslaufenden Blockkante (9), wobei sich die einlaufende Blockkante (10) aus zwei Abschnitten (10a, 10b) zusammensetzt, von welchen der an die Umfangsrille (5) anschließende Abschnitt (10b) der kürzere ist und welche zueinander unter einem stumpfen Winkel (γ) verlaufen, sodass jeder Block (8) zwischen dem einen Abschnitt (10b) und der den Block (8) bei der Umfangsrille (5) in Umfangsrichtung begrenzenden Blockkante (11) einen keilartigen bzw. dreieckigen Ansatz (12) aufweist, wobei der längere Abschnitt (10a) der einlaufenden Blockkante (10) über seine Länge mit einer eine Schrägfläche bildenden Fase (13) versehen ist, welche entlang des kürzeren Abschnittes (10b) ausläuft, wobei die auslaufende Blockkante (9) über ihre gesamte Erstreckung einen insgesamt im Wesentlichen geraden oder leicht bogenförmigen Verlauf aufweist, wobei der gegenseitige Abstand zwischen der einlaufenden Blockkante (10) und der auslaufenden Blockkante (9) an einer Knickstelle zwischen den beiden Abschnitten (10a, 10b) der einlaufenden Blockkante (10) am größten ist und ausgehend von der Knickstelle in beide Richtungen abnimmt,
**dadurch gekennzeichnet,**
**dass** die an der einlaufenden Blockkante (10) ausgebildete Fase (13) ihre größte Flächenbreite (f_{b}) an der Knickstelle zwischen den Abschnitten (10a, 10b) dieser Blockkante (10) aufweist.

2. Fahrzeugluftreifen nach Anspruch 1, **dadurch gekennzeichnet, dass** der Winkel (γ), den die Abschnitte (10a, 10b) der einlaufenden Blockkante (10) miteinander einschließen, 140° bis 170° beträgt.

3. Fahrzeugluftreifen nach Anspruch 1 oder 2, **dadurch gekennzeichnet, dass** an der auslaufenden Blockkante (9) über ihre gesamte Erstreckung ebenfalls eine Fase (13') ausgebildet ist.

4. Fahrzeugluftreifen nach einem der Ansprüche 1 bis 3, **dadurch gekennzeichnet, dass** der größte Abstand zwischen den Blockkanten (9, 10) 5 mm bis 8 mm beträgt.

5. Fahrzeugluftreifen nach einem der Ansprüche 1 bis 4, **dadurch gekennzeichnet, dass** der längere Abschnitt (10a) der einlaufenden Blockkante (10) mit der auslaufenden Blockkante (9) einen spitzen Winkel (β) von 5° bis 15° einschließt.

6. Fahrzeugluftreifen nach einem der Ansprüche 1 bis 5, **dadurch gekennzeichnet, dass** im Bereich des keilartigen Ansatzes (12) jeder Block (8) mit dem benachbarten Block (8) über eine die Querrille (7) überbrückende Grundanhebung (15) verbunden ist.

7. Fahrzeugluftreifen nach Anspruch 6, **dadurch gekennzeichnet, dass** die Grundanhebung (15) die Tiefe (T) der Querrille (7) an dieser Stelle lokal um 40% bis 60% verringert.

8. Fahrzeugluftreifen nach Anspruch 6 oder 7, **dadurch gekennzeichnet, dass** die Grundanhebung (15) beidseitig geneigte, Richtung Rillengrund abfallende Flankenflächen (17,18) aufweist.

9. Fahrzeugluftreifen nach einem der Ansprüche 1 bis 8, **dadurch gekennzeichnet, dass** die Blöcke (8) die Blöcke einer schulterseitig verlaufende Blockreihe (4) sind.

10. Fahrzeugluftreifen nach einem der Ansprüche 1 bis 9, **dadurch gekennzeichnet, dass** der Laufstreifen ein insgesamt gepfeilt ausgeführtes, laufrichtungsgebundenes Laufstreifenprofil aufweist.

## Claims

1. Pneumatic vehicle tyre having a tread profile with at least one circumferential channel (2, 5) and with at least one block row (4) which is delimited at least on one side by a circumferential channel (5), the blocks (8) of which block row are separated from one another by transverse channels (7) which are delimited at the block surfaces by block edges (9, 10), a leading block edge (10) which meets the ground first during the rolling movement of the tyre (during forward travel) and the trailing block edge (9) which is provided on the adjacent block (8), wherein the leading block edge (10) is made up of two sections (10a, 10b), of which the section (10b) adjoining the circumferential channel (5) is the relatively short section and which run toward one another at an obtuse angle (γ), such that each block (8) has a wedge-shaped or triangular projection (12) between one section (10b) and that block edge (11) which delimits the block (8) in the circumferential direction at the circumferential channel (5), wherein the relatively long section (10a) of the leading block edge (10) is provided, over its length, with a bevel (13) which forms an oblique surface which tapers off along the relatively short section (10b), wherein the trailing block edge (9) has, over its entire extent, an altogether substantially straight or slightly curved profile, wherein the mutual spacing between the leading block edge (10) and the trailing block edge (9) is at its greatest at a bend point between the two sections (10a, 10b) of the leading block edge (10) and decreases in both directions proceeding from the bend point, **characterized**
**in that** the bevel (13) formed at the leading block edge (10) has its greatest surface width (f_{b}) at the bend point between the sections (10a, 10b) of said block edge (10).

2. Pneumatic vehicle tyre according to Claim 1, **characterized in that** the angle (γ) that the sections (10a, 10b) of the leading block edge (10) enclose with one another amounts to 140 to 170°.

3. Pneumatic vehicle tyre according to Claim 1 or 2, **characterized in that** a bevel (13') is likewise formed at the trailing block edge (9), over the entire extent thereof.

4. Pneumatic vehicle tyre according to one of Claims 1 to 3, **characterized in that** the greatest spacing between the block edges (9, 10) amounts to 5 mm to 8 mm.

5. Pneumatic vehicle tyre according to one of Claims 1 to 4, **characterized in that** the relatively long section (10a) of the leading block edge (10) encloses an acute angle (β) of 5° to 15° with the trailing block edge (9).

6. Pneumatic vehicle tyre according to one of Claims 1 to 5, **characterized in that**, in the region of the wedge-shaped projection (12), each block (8) is connected to the adjacent block (8) by means of a base elevation (15) which spans the transverse channel (7).

7. Pneumatic vehicle tyre according to Claim 6, **characterized in that** the base elevation (15) locally reduces the depth (T) of the transverse channel (7) at that location by 40% to 60%.

8. Pneumatic vehicle tyre according to Claim 6 or 7, **characterized in that** the base elevation (15) has, on both sides, inclined flank surfaces (17, 18) which slope downward in the direction of the channel base.

9. Pneumatic vehicle tyre according to one of Claims 1 to 8, **characterized in that** the blocks (8) are the blocks of a block row (4) which runs at the shoulder side.

10. Pneumatic vehicle tyre according to one of Claims 1 to 9, **characterized in that** the tread has a directional tread profile of arrowed overall design.

## Revendications

1. Pneumatique de véhicule avec un profil de bande de roulement comprenant au moins une rainure périphérique (2, 5) et au moins une série de blocs (4) limitée au moins sur un côté par une rainure périphérique (5), dont les blocs (8) sont séparés l'un de l'autre par des rainures transversales (7), qui sont limitées sur les surfaces des blocs par des arêtes de blocs (9, 10), une arête de bloc d'entrée (10) entrant d'abord dans le sol lors du roulement du pneumatique (en marche avant) et l'arête de bloc de sortie (9) prévue sur le bloc voisin (8), dans lequel l'arête de bloc d'entrée (10) se compose de deux parties (10a, 10b), dont la partie se raccordant à la rainure périphérique (5) est plus courte et qui s'étendent sous un angle obtus (γ) l'une par rapport à l'autre, de telle manière que chaque bloc (8) présente entre ladite une partie (10b) et l'arête de bloc (11) limitant en direction périphérique le bloc (8) à la rainure périphérique (5) un épaulement en forme de coin ou de triangle (12), dans lequel la partie plus longue (10a) de l'arête de bloc d'entrée (10) est dotée sur sa longueur d'un chanfrein (13) formant une face oblique, qui se termine le long de la partie plus courte (10b), dans lequel l'arête de bloc de sortie (9) présente sur toute son extension une allure au total essentiellement droite ou légèrement incurvée, dans lequel la distance mutuelle entre l'arête de bloc d'entrée (10) et l'arête de bloc de sortie (9) est la plus grande à un point de brisure entre les deux parties (10a, 10b) de l'arête de bloc d'entrée (10) et diminue dans les deux directions à partir du point de brisure,
**caractérisé en ce que** le chanfrein (13) formé sur l'arête de bloc d'entrée (10) présente sa plus grande largeur de surface (f_{b}) au point de brisure entre les parties (10a, 10b) de cette arête de bloc (10).

2. Pneumatique de véhicule selon la revendication 1, **caractérisé en ce que** l'angle (γ), que les parties (10a, 10b) de l'arête de bloc d'entrée (10) forment l'une avec l'autre, vaut 140° à 170°.

3. Pneumatique de véhicule selon la revendication 1 ou 2, **caractérisé en ce qu'**un chanfrein (13') est également formé sur l'arête de bloc de sortie (9) sur toute son extension.

4. Pneumatique de véhicule selon l'une quelconque des revendications 1 à 3, **caractérisé en ce que** la plus grande distance entre les arêtes de bloc (9, 10) vaut 5 mm à 8 mm.

5. Pneumatique de véhicule selon l'une quelconque des revendications 1 à 4, **caractérisé en ce que** la partie plus longue (10a) de l'arête de bloc d'entrée (10) forme avec l'arête de bloc de sortie (9) un angle aigu (β) de 5° à 15°.

6. Pneumatique de véhicule selon l'une quelconque des revendications 1 à 5, **caractérisé en ce que** chaque bloc (8) est relié au bloc voisin (8), dans la région de l'épaulement en forme de coin (12), par un rehaussement du fond (15) barrant la rainure transversale (7).

7. Pneumatique de véhicule selon la revendication 6, **caractérisé en ce que** le rehaussement du fond (15) réduit la profondeur (T) de la rainure transversale (7) localement de 40 % à 60 % à cet endroit.

8. Pneumatique de véhicule selon la revendication 6 ou 7, **caractérisé en ce que** le rehaussement du fond (15) présente de part et d'autre des faces de flanc (17, 18) inclinées en descente en direction du fond de la rainure.

9. Pneumatique de véhicule selon l'une quelconque des revendications 1 à 8, **caractérisé en ce que** les blocs (8) sont les blocs d'une rangée de blocs (4) s'étendant du côté de l'épaulement.

10. Pneumatique de véhicule selon l'une quelconque des revendications 1 à 9, **caractérisé en ce que** la bande de roulement présente un profil de bande de roulement réalisé globalement en forme de flèche, lié à la direction de roulement.
